# EUROPÄISCHE PATENTSCHRIFT

(11) **EP 0 639 430 B1**
(45) Veröffentlichungstag und Bekanntmachung des Hinweises auf die Patenterteilung: **26.01.2000**
(21) Anmeldenummer: 94112109.7
(22) Anmeldetag: 03.08.1994
(51) Int. Cl.: B25B 5/10, B23Q 1/28

(54) **Spanneinrichtung**
Clamping device
Dispositif de serrage

(30) Priorität: 19.08.1993 DE 4327861
(43) Veröffentlichungstag der Anmeldung: 22.02.1995
(73) Patentinhaber: Bessey & Sohn GmbH & Co., D-74321 Bietigheim-Bissingen (DE)
(72) Erfinder: Schmid, Clemens, D-71287 Weissach (DE); Klöpfer, Gerhard, D-74385 Pfeidelsheim (DE)
(74) Vertreter: Beck, Jürgen, Dr. Dipl.-Phys.

(56) Entgegenhaltungen:
- DE-B- 1 109 491
- DE-C- 57 422
- DE-U- 8 226 230
- GB-A- 2 228 694
- GB-A- 19 147 748
- DATABASE WPI Week 8415, Derwent Publications Ltd., London, GB; AN 84-092786 & SE-A-432 553 (H.WIKLUND) 26. Februar 1984

## Beschreibung

Die Erfindung betrifft eine Spanneinrichtung nach dem Oberbegriff des Patentanspruchs 1.

Eine derartige Spanneinrichtung ist beispielsweise aus der DE-U-82 26 230 bekannt. Bei einer derartigen Spanneinrichtung ist das Verankerungselement eine Schraube, welche aufgrund des Spannarms nur von seitlich des Gehäuses zugänglich ist, so daß ein Anziehen dieser Schraube, um das Gehäuse auf der Auflagefläche zu fixieren, vielfach umständlich ist.

Aus der GB 2 228 694 ist eine Spanneinrichtung zum Spannen von Werkstücken auf einem Maschinentisch bekannt, welche, ein Gehäuse aufweist, das mittels eines Verankerungselements auf einer Auflagefläche eines Trägers fixierbar ist. Ferner umfaßt diese Spanneinrichtung ein sich an dem Gehäuse abstützendes Festspannteil, welches zum Fixieren des Gehäuses relativ zu diesem von einer ersten Stellung in eine zweite Stellung bewegbar ist, wobei in der ersten Stellung das Gehäuse von der Auflagefläche lösbar ist und in der zweiten Stellung das Festspannteil durch Einwirkung auf das Verankerungselement mit einer Festspannkraft das Gehäuse auf der Auflagefläche fixierbar ist. Das Festspannteil ist jedoch nur dann wirksam, wenn eine Spannspindel das Spannelement beaufschlagt und damit auch auf das Festpannteil wirkt.

Der Erfindung liegt ausgehend von der DE-U-82 26 230 die Aufgabe zugrunde, eine Spanneinrichtung der gattungsgemäßen Art derart zu verbessern, daß eine Fixierung des Gehäuses auf der Auflagefläche in möglichst einfacher Weise erfolgen kann.

Diese Aufgabe wird bei einer Spanneinrichtung der eingangs beschriebenen Art erfindungsgemäß durch die in kennzeichnender Teil des Patentanspruchs 1 genannten Merkmale gelöst.

Der Vorteil der erfindungsgemäßen Lösung ist darin zu sehen, daß bei dieser nunmehr keine direkte Einwirkung einer Bedienungsperson auf das Verankerungselement erforderlich ist, sondern nur noch eine Einwirkung auf das Feststellteil, welches die Möglichkeit eröffnet, diese Einwirkung auf das Feststellteil sowohl von der Zugänglichkeit als auch der Einwirkungskraft möglichst bedienungsfreundlich zu gestalten.

Um in der zweiten Stellung des Festspannteils, insbesondere bei unterschiedlichstem Spiel zwischen dem Festspannteil und dem Verankerungselement in der ersten Stellung, stets mit im wesentlichen vergleichbarer Kraft auf das Verankerungselement einwirken zu können, ist vorzugsweise vorgesehen, daß das Festspannteil einen elastischen Kraftspeicher umfaßt, wobei dessen Wirkung dadurch erfindungsgemäß bestehen bleibt, daß das Festspannteil in der zweiten Stellung durch ein Halteelement fixierbar ist.

Eine besonders gute Fixierung des Gehäuses auf der Auflagefläche ist dann möglich, wenn das Festspannteil in der zweiten Stellung mit einer von der Auflagefläche weg gerichteten Festspannkraft auf das Verankerungselement wirkt.

Das Festspannteil kann in den bislang beschriebenen Ausführungsbeispielen in beliebiger Art und Weise auf das Verankerungselement wirken. Besonders vorteilhaft ist es jedoch, wenn das Festspannteil auf einen Kopf des Verankerungselements einwirkt, da in diesem Fall das Festspannteil konstruktiv einfach gestaltet werden kann.

Ein besonders zweckmäßiges Ausführungsbeispiel sieht vor, daß das Festspannteil in der zweiten Stellung den Kopf untergreift und in einer von einem Bodenteil des Gehäuses weg weisenden Richtung beaufschlagt. Damit ist in besonders einfacher Weise ein Verspannen des Verankerungselements und des Gehäuses sowie des Trägers gegeneinander erreichbar.

Im Zusammenhang mit den bislang erläuterten Ausführungsbeispielen wurden die Anordnung des Festspannteils im Gehäuse selbst und dessen Abstützung nicht näher spezifiziert, so daß alle Möglichkeiten einer Abstützung des Festspannteils im Gehäuse denkbar sind. Als konstruktiv besonders einfach hat es sich erwiesen, wenn das Festspannteil sich auf dem Bodenteil des Gehäuses abstützt.

Hinsichtlich der Ausbildung des Festspannteil selbst wurden bislang keine näheren Angaben gemacht. So sieht ein vorteilhaftes Ausführungsbeispiel vor, daß das Festspannteil einen kippbaren Festspannhebel umfaßt, welcher insbesondere mit einem Endbereich auf das Verankerungselement einwirkt. Beispielsweise kann der kippbare Hebel als einarmiger Hebel ausgebildet sein und mit seinem der Kippachse abgewandten Ende auf das Verankerungselement einwirken.

Als besonders vorteilhaft, insbesondere für die Betätigung desselben, hat es sich erwiesen, wenn der Festspannhebel eine Wippe ist. In diesem Fall ist beispielsweise vorgesehen, daß die Wippe in der zweiten Stellung mit einem ersten Schenkel auf das Verankerungselement einwirkt und im Bereich eines zweiten Schenkels beaufschlagt ist.

Beispielsweise ist dieser elastische Kraftspeicher so ausgebildet, daß er von einem spannungslosen Zustand in einen Spannungszustand bringbar ist. Insbesondere ist dabei in der ersten Stellung des Festspannteils der Kraftspeicher im spannungslosen Zustand und in der zweiten Stellung des Festspannteils im Spannungszustand.

Es ist aber auch denkbar, lediglich unterschiedlich starke Spannungszustände des elastischen Kraftspeichers vorzusehen.

Vorzugsweise ist das Festspannteil so konzipiert, daß der elastische Kraftspeicher im Spannungszustand mit der Festspannkraft auf das Verankerungselement wirkt.

Eine konstruktiv besonders einfache und vorteilhafte Lösung sieht vor, daß der elastische Kraftspeicher und der Festspannhebel ein einziges Teil bilden. In diesem Fall ist vorgesehen, daß der Festspannhebel oder die Wippe als Federhebel oder Federwippe ausgebildet sind, und somit sowohl die Funktion eines Hebels als auch des elastischen Kraftspeichers in sich vereinigen.

Hierbei ist beispielsweise der Federhebel oder die Federwippe durch Beaufschlagung eines hierzu vorgesehenen Druckbereichs in den Spannungszustand bringbar.

Zur Frage der Betätigbarkeit des Festspannteils wurden im Zusammenhang mit den bisherigen Ausführungsbeispielen keine näheren Angaben gemacht. So ist es besonders vorteilhaft, wenn das Festspannteil von einem außerhalb eines vorderen Bereichs des Gehäuses liegenden Bereich aus betätigbar ist. Dadurch ist die Betätigung des Festspannteils erheblich erleichtert, da insbesondere der vordere Bereich des Gehäuses nahe des Werkstücks liegt und auch aufgrund des nötigen Bewegungsraums für den Spannarm die Betätigung erschwert ist.

Als besonders zweckmäßig hat es sich erwiesen, wenn das Festspannteil von einem hinteren Bereich des Gehäuses aus betätigbar ist, insbesondere da der hintere Bereich des Gehäuses nicht derart verschmutzungsgefährdet ist, wie der vordere, dem Werkstück zugewandte Bereich. Ein weiterer Vorteil ist darin zu sehen, daß der hintere Bereich des Gehäuses in der Regel leichter zugänglich ist, als der vordere, dem Werkstück und gegebenenfalls anderen Spanneinrichtungen zugewandte Bereich.

Eine Möglichkeit wäre die Betätigung des Festspannteils ausgehend von einem hinteren Seitenwandbereich des Gehäuses. Alternativ dazu ist es vorteilhaft, wenn das Festspannteil von einer Oberseite des Gehäuses ausgehend betätigbar ist.

Alternativ oder ergänzend dazu ist vorteilhafterweise vorgesehen, daß das Festspannteil von der Hinterseite des Gehäuses aus betätigbar ist.

Erfindungsgemäß ist vorgesehen, daß das Festspannteil durch die Spannspindel von der ersten in die zweite Stellung bewegbar ist. Diese Lösung erlaubt, durch die ohnehin für die Betätigung der Spannspindel erforderlichen Elemente auch gleichzeitig das Festspannteil von der ersten in die zweite Stellung zu bewegen.

Die Betätigung des Festspannteils über die Spannspindel könnte entweder durch Ausnützung einer Drehbewegung der Spannspindel erfolgen oder auch durch ein mit der Spannspindel kämmendes Element. Besonders vorteilhaft ist es jedoch, wenn das Festspannteil durch eine Axialverschiebung der Spannspindel relativ zum Gehäuse von der ersten in die zweite Stellung bringbar ist. Diese Lösung sieht somit eine Bewegungsform der Spannspindel für die Betätigung des Festspannteils vor, die für die Bewegung des Spannelements nicht unmittelbar erforderlich ist.

Zur Übertragung der Axialverschiebung der Spannspindel auf das Festspannteil sind unterschiedlichste Lösungen denkbar.

Als besonders zweckmäßig hat es sich erwiesen, wenn das Festspannteil durch ein im Gehäuse beweglich geführtes Axiallager der Spannspindel von der ersten in die zweite Stellung bringbar ist, wobei insbesondere das Axiallager das Festspannteil im Fall eines Festspannhebels oder einer Wippe beaufschlagt.

Eine Axialverschiebung der Spannspindel ist durch die unterschiedlichsten Möglichkeiten erreichbar. Beispielsweise wäre dies bei einer axialverschieblichen Spannspindel dadurch möglich, daß durch manuelles Angreifen am Spannarm die Spannspindel axial verschoben wird.

Eine besonders große Kraft zur Überführung des Festspannteils von der ersten in die zweite Stellung, die insbesondere beim Vorsehen eines elastischen Kraftspeichers im Festspannelement wünschenswert ist, sieht vor, daß das Festspannteil über eine Verschiebung der Spannspindel bei blockierter Bewegung des Spannelements in die zweite Stellung bringbar ist. Eine derartige Blockierung der Bewegung des Spannelements ist beispielsweise dadurch erreichbar, daß das Spannelement auf ein Werkstück oder auf den Maschinentisch drückt oder aber auch dadurch, daß das Spannelement gegen einen Anschlag läuft, welcher beispielsweise am Gehäuse vorgesehen ist.

In den bislang beschriebenen Ausführungsbeispielen wurde lediglich darauf eingegangen, wie ein Überführen des Festspannteils von der ersten in die zweite Stellung erfolgen soll.

Es wurde jedoch nicht darauf eingegangen, wie das Festspannteil in der zweiten Stellung gehalten werden soll, um hiermit das Gehäuse fest gegenüber der Auflagefläche zu fixieren.

Eine derartige Fixierung des Festspannteils könnte beispielsweise kraftschlüssig erfolgen. Noch vorteilhafter, insbesondere im Hinblick auf die Betriebssicherheit der erfindungsgemäßen Spanneinrichtung, ist es jedoch, wenn das Festspannteil in der zweiten Stellung durch das Halteelement mit Formschluß festlegbar ist.

Das Halteelement kann in unterschiedlichster Art und Weise ausgebildet sein. Beispielsweise könnte das Halteelement ein das Festspannteil in seiner zweiten Stellung blockierender Bolzen sein. Besonders zweckmäßig ist es jedoch, wenn das Halteelement als Rastelement ausgebildet ist.

Eine konstruktiv vorteilhafte Lösung sieht dabei vor, daß das Rastelement in seiner verrastenden Stellung an einer Rastfläche des Festspannteils anliegt, vorzugsweise mit einer an dem Rastelement angeformten Haltefläche.

Um zu erreichen, daß das Rastelement selbsttätig in seine verrastende Stellung übergeht und auch in dieser verbleibt, ist vorzugsweise vorgesehen, daß das Rastelement in Richtung seiner verrastenden Stellung vorgespannt ist.

In diesem Fall ist zweckmäßigerweise ein Betätigungselement vorgesehen, mit welchem das Rastelement aus seiner verrastenden Stellung herausbewegbar ist.

Hinsichtlich der Anordnung des Halteelements wurden bislang keine weiteren Angaben gemacht. Besonders vorteilhaft ist es, wenn das Halteelement in einem hinteren Bereich des Gehäuses angeordnet ist, um ebenfalls problemlos betätigbar zu sein.

Besonders zweckmäßig ist es, wenn das Halteelement an einer Hinterseite des Gehäuses angeordnet und von dieser aus betätigbar ist.

Bei allen bislang beschriebenen Ausführungsbeispielen der erfindungsgemäßen Lösung ist zweckmäßigerweise vorgesehen, daß das Spannelement um eine Achse gegenüber dem Gehäuse verschwenkbar ist und einen vom Gehäuse abstehenden Spannarm aufweist, wobei vorzugsweise das Spannelement ein um die Achse am Gehäuse drehbar gelagertes Lagerteil aufweist.

Insbesondere ist ferner vorgesehen, daß die Spannspindel in einen Zahnkranz des Lagerteils eingreift, um durch Drehen des Lagerteils um die Achse auch den Spannarm zu verschwenken.

Weitere Merkmale und Vorteile erfindungsgemäßer Ausgestaltungen sind Gegenstand der nachfolgenden Beschreibung sowie der zeichnerischen Darstellung einiger Ausführungsbeispiele.

In der Zeichnung zeigen:
- Fig. 1: einen Längsschnitt durch ein erstes Ausführungsbeispiel einer erfindungsgemäßen Spanneinrichtung;
- Fig. 2: eine Ansicht in Richtung des Pfeils A in Fig. 1;
- Fig. 3: einen Schnitt längs Linie 3-3 in Fig. 1;
- Fig. 4: eine vergrößerte Darstellung eines unteren Bereichs des ersten Ausführungsbeispiels in einem Längsschnitt ähnlich Fig. 1 mit einem Festspannelement in der ersten Stellung;
- Fig. 5: eine Darstellung ähnlich Fig. 4 mit dem Festspannelement in der zweiten Stellung;
- Fig. 6: einen Längsschnitt durch ein zweites Ausführungsbeispiel einer erfindungsgemäßen Spanneinrichtung mit dem Festspannelement in der ersten Stellung und
- Fig. 7: einen Teilausschnitt des zweiten Ausführungsbeispiels ähnlich Fig. 6 mit dem Festspannelement in der zweiten Stellung;

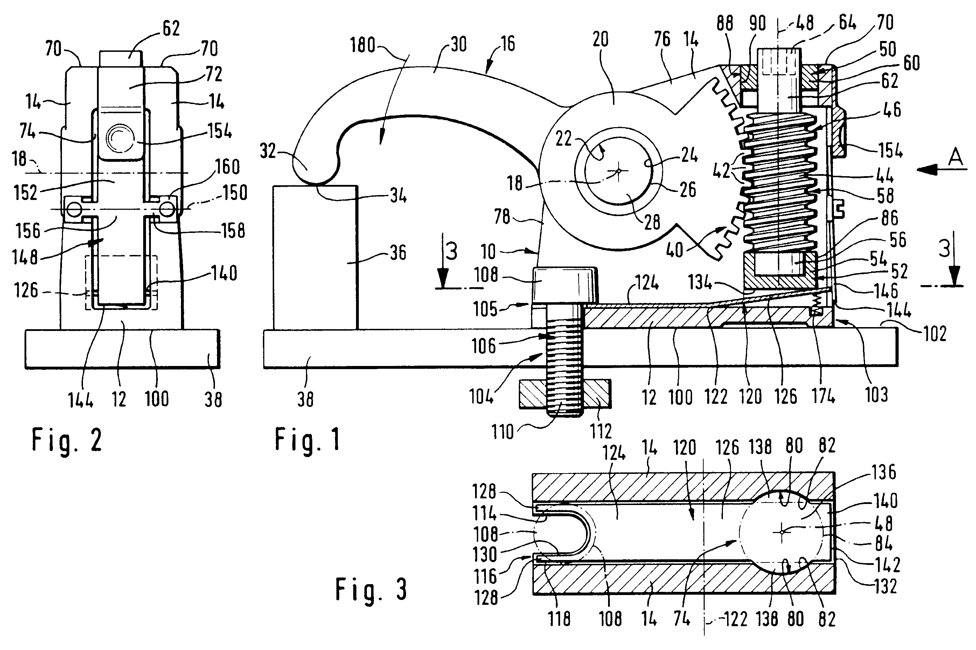

Ein erstes Ausführungsbeispiel einer erfindungsgemäßen Spanneinrichtung, dargestellt in Fig. 1 und 2, umfaßt ein als Ganzes mit 10 bezeichnetes Gehäuse, mit einem Bodenteil 12 und sich zwei im Abstand voneinander vom Bodenteil 12 erhebenden Seitenwänden 14. An diesem Gehäuse 10 ist ein als Ganzes mit 16 bezeichnetes Spannelement um eine Achse 18 drehbar gelagert, wobei dieses Spannelement 16 ein Lagerteil 20 aufweist, welches zwischen den Seitenwänden 14 des Gehäuses 10 liegt und einen kreiszylindrischen Durchbruch 22 aufweist, welcher mit seiner Zylindermantelfläche 24 auf einer zylindrischen Außenmantelfläche 26 eines als Ganzes mit 28 bezeichneten Lagerzylinders sitzt, wobei die Zylindermantelflächen 24 und 26 koaxial zur Achse 18 angeordnet sind. Der Lagerzylinder 28 ist dabei vorzugsweise drehfest mit dem Gehäuse 10 verbunden, so daß das Lagerteil 20 mit der Zylindermantelfläche 24 des Durchbruchs 22 auf der Zylindermantelfläche 26 um die Achse 18 drehbar geführt ist.

Von dem Lagerteil 20 erstreckt sich aus dem Gehäuse 10 heraus ein Spannarm 30 des Spannelements, welcher an einem vorderen, dem Lagerteil 20 abgewandten Ende 32 eine Spannfläche 34 trägt. Mit dieser Spannfläche 34 ist ein Werkstück 36 beispielsweise auf einem Maschinentisch 38 durch Beaufschlagen mittels des Spannarms 30 festspannbar.

Zum Beaufschlagen des Werkstücks 36 mittels der Spannfläche 34 ist das Spannelement 16 mit einem Zahnkranz 40 versehen, welcher beispielsweise an das Lagerteil 20 angeformt ist und ebenfalls zwischen den beiden Seitenwänden 14 liegt. Dieser Zahnkranz 40 greift jeweils mit einem Teil seiner Zähne 42 in Gewindegänge 44 einer als Ganzes mit 46 bezeichneten Spannspindel ein, welche in dem Gehäuse 10 um eine Spindelachse 48 drehbar gelagert ist. Die Lagerung der Spannspindel 46 erfolgt dabei durch ein oberes Radiallager 50 und ein unteres Radial- und Axiallager 52, wobei das Radial- und Axiallager 52 vorzugsweise eine tassenähnlich geformte Lagerbüchse 54 umfaßt, in welche ein Lagerbolzen 56 der Spannspindel 46 eingreift, welcher an einen die Gewindegänge 44 tragenden Gewindeabschnitt 58 der Spannspindel 46 angeformt ist.

Das Radiallager 50 umfaßt seinerseits einen Lagerring 60, welchen ein Stehbolzen 62 der Spannspindel 46 durchsetzt, der seinerseits an den Gewindeabschnitt 58 angeformt ist und an einem dem Gewindeabschnitt 58 gegenüberliegenden Ende eine Aufnahme 64, beispielsweise in Form eines Sechskants für einen Spannschlüssel, aufweist, die über eine Oberseite des Gehäuses 10 übersteht.

Das Gehäuse 10 umfaßt, wie in Fig. 2 dargestellt, in einem dem Spannarm 30 abgewandten hinteren Bereich 103 eine die beiden Seitenwände 14 im Bereich ihrer Oberkanten 70 verbindende Brücke 72, so daß zwischen der Brücke 72 und dem Bodenteil 12 ein zwischen den Seitenwänden 14 liegender Freiraum 74 verbleibt, welcher sich parallel zu den Seitenwänden 14 durch das gesamte Gehäuse 10 hindurcherstreckt und im Bereich des Lagerteils sowohl in eine obere Öffnung 76 als auch eine vordere Öffnung 78 übergeht.

Über dem Bodenteil 12 verlaufen parallel zur Spindelachse 48 und beiderseits des Freiraums 74 in die Seitenwände 14 eingearbeitete Vertiefungen 80, welche jeweils einen kreissegmentähnlichen Querschnitt aufweisen, so daß Vertiefungsflächen 82 derselben Teilflächen einer in Fig. 3 gestrichelt angedeuteten Zylinderfläche 84 sind, die koaxial zur Spindelachse 48 verläuft. Die beiden Vertiefungen 80 führen dabei die Lagerbüchse 54 mit ihrer ebenfalls zylindrischen Außenmantelfläche 86 in Richtung der Spindelachse 48 verschiebbar. Die beiden Vertiefungen 80 münden in einen Durchbruch 88 durch die Brücke 72, wobei Durchbruchflächen 90 eine Fortsetzung der Zylindermantelfläche 84 darstellen. In dem Durchbruch 88 ist der Lagerring 60 eingesetzt und liegt an den Durchbruchflächen 90 mit Pressitz und somit in Richtung der Spindelachse 48 unverschieblich an.

Die gesamte Spannspindel 46 ist somit in Richtung der Spindelachse 48 axial verschiebbar, wobei dies durch ein axiales Gleiten des Stehbolzens 62 in dem mit Pressitz in dem Durchbruch 88 sitzenden Lagerring 60 erfolgt und durch ebenfalls ein axiales Gleiten des Radial- und Axiallagers 52 in den Vertiefungen 80.

Das Gehäuse 10 stützt sich mit einer Bodenfläche 100 auf einer Auflagefläche 102 des Maschinentischs 38 ab und wird durch ein Verankerungselement 104 an dem Maschinentisch 38 verankert, welches in einem einem die Spannspindel 46 aufnehmenden hinteren Bereich 103 gegenüberliegenden vorderen Bereich 105 des Gehäuses 10 angreift. Das Verankerungselement 104 umfaßt im einfachsten Fall eine Schraube 106 mit einem Kopf 108, von welchem ausgehend sich ein Gewindeabschnitt 110 erstreckt, der seinerseits in einen ebenfalls vom Verankerungselement 104 umfaßten Nutenstein 112 eingeschraubt ist, wobei der Nutenstein 112 in T-Nuten des Maschinentischs 38 einsetzbar und in diesen gleitend verschiebbar ist.

Die Schraube 106 ist dabei so angeordnet, daß deren Gewindeabschnitt 110 eine U-förmige Ausnehmung 114 im Bodenteil 12 durchgreift, welche zu einer Vorderseite 116 hin offen ist, so daß das Bodenteil 12 mit der U-förmigen Ausnehmung 114 den Gewindeabschnitt 110 umgreifend unter den Kopf 108 der Schraube 106 schiebbar ist, so daß der Kopf 108 beiderseits der U-förmigen Ausnehmung 114 eine Oberfläche 118 des Bodenteils 12 übergreift. Auf der Oberfläche 118 des Bodenteils 12 ist ferner eine als Festspannteil dienende Federwippe 120 angeordnet, welche um eine Kippachse 122 kippbar ist und einen ersten Schenkel 124 und einen zweiten Schenkel 126 aufweist.

Der erste Schenkel 124 erstreckt sich dabei von der Kippachse 122, welche ungefähr in einem mittigen Bereich des Bodenteils 12 angeordnet und ungefähr parallel zur Achse 18 ausgerichtet ist, in Richtung des Verankerungselements 104 und umgreift mit zwei gabelförmigen Fingern 128 eine zwischen diesen liegende U-förmige Ausnehmung 130, welche ungefähr die gleiche Dimension wie die Ausnehmung 114 aufweist. Die beiden Finger 128 umgreifen dabei ebenfalls den Gewindeabschnitt 110 der Schraube 106 und untergreifen den Kopf 108.

Der zweite Schenkel 126 erstreckt sich in die entgegengesetzte Richtung des ersten Schenkels 124 bis zu einer Hinterseite 132 des Gehäuses 10 und untergreift dabei eine untere Druckfläche 134 der Lagerbüchse 54 mit einem Druckbereich 136, welcher genau unter der unteren Druckfläche 134 der Lagerbüchse 54 liegt. Zur Fixierung der Federwippe 120 sind an den zweiten Schenkel 126 im Druckbereich 136 beiderseits Seitenflügel 138 angeformt, welche seitlich jeweils in die Vertiefungen 80 eingreifen und vorzugsweise an den Vertiefungsflächen 82 anliegen, um die gesamte Federwippe 120 gegen eine Verschiebung parallel zu den Seitenwänden 14 zu sichern.

Die Federwippe 120 umfaßt ferner eine Rastfläche 140, welche an dem zweiten Schenkel 126, und zwar an einem der Hinterseite 132 zugewandten Ende, angeformt ist und sich im wesentlichen unmittelbar an eine Hinterkante 142 des zweiten Schenkels 126 anschließt.

Diese Rastfläche 140 ist unter eine Haltefläche 144 einer Rastzunge 146 bringbar, wobei die Haltefläche 144 auf der Rastfläche 140 aufliegt. Die Rastzunge 146 bildet einen Schenkel einer als Ganzes mit 148 bezeichneten Rastwippe, welche um eine Kippachse 150, die ungefähr parallel zur Achse 18 verläuft, kippbar ist und einen sich auf der Rastzunge 146 gegenüberliegenden Seite der Kippachse 150 erstreckenden Betätigungsschenkel 152 umfaßt, über welchen eine Betätigung der Rastwippe 148 erfolgt. Vorzugsweise ist hierzu ein Druckstück 154 vorgesehen, welches flexibel an dem Gehäuse 10 gehalten ist.

Um die Rastzunge 146 für eine Bewegung in Richtung eines Übergreifens des Rastfläche 140 vorzuspannen, umfaßt die Rastwippe 148 beiderseits im Bereich der Kippachse 150 von einem die Rastzunge 146 und den Betätigungsschenkel 152 verbindenden Mittelstück 156 abstehende Torsionsstege 158, welche Halteflügel 160 tragen.

Mit diesen Halteflügeln 160 ist die Rastwippe 148 derart an den beiden Seitenwänden 40 befestigt, daß die Torsionsstege 158 tordiert sind und mit einem Drehmoment auf die Rastzunge 146 so wirken, daß diese das Bestreben hat, mit der Haltefläche 144 die Rastfläche 140 zu übergreifen.

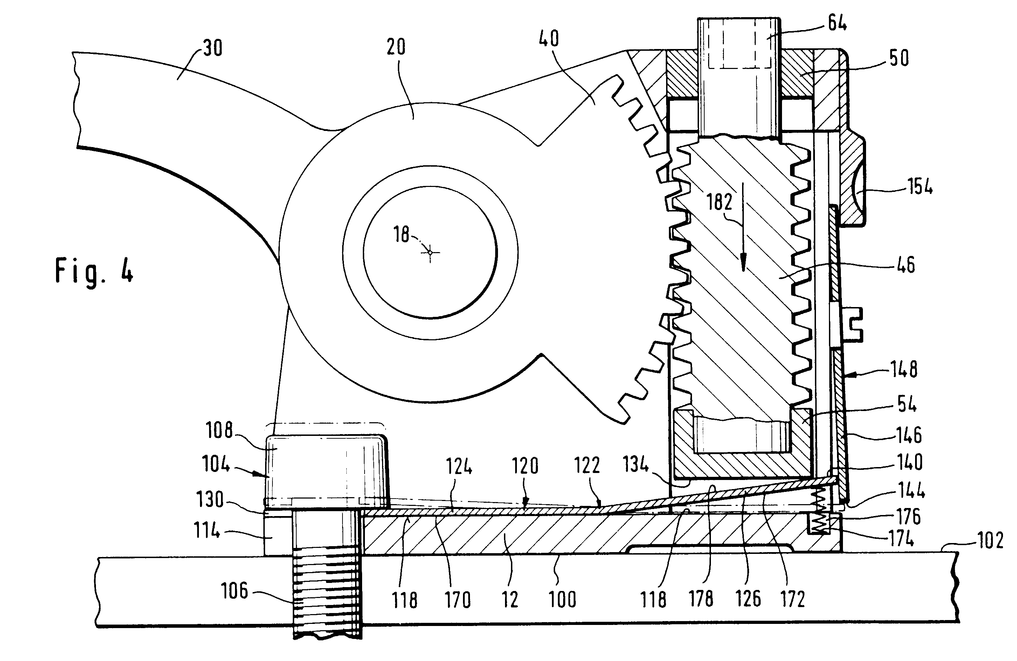

Dadurch, daß der erste Schenkel 124 und der zweite Schenkel 126 der Federwippe 120 einen Winkel kleiner 180° miteinander einschließen, liegt in einer ersten, in Fig. 4 dargestellten Stellung der erste Schenkel 124 mit seiner Unterseite 170 auf der Oberfläche 118 des Bodenteils 12 auf, während der zweite Schenkel 126 mit seiner Unterseite 172 von der Kippachse 122 ausgehend in einem spitzen Winkel zur Oberseite 118 des Bodenteils 12 verläuft. Um diese Stellung der Federwippe 120 zu fixieren, ist eine Hilfsdruckfeder 174 vorgesehen, welche sich in einer Ausnehmung 176 im Bodenteil 12 abstützt und hinter der Lagerbüchse 54, vorzugsweise nahe der Hinterkante 142 gegen die Unterseite 172 des zweiten Schenkels 126 drückt, um diesen im maximal möglichen Abstand von der Oberfläche 118 zu halten und den ersten Schenkel 124 auf dem Bodenteil 12 aufliegend zu halten.

In dieser ersten Stellung der Federwippe 120 liegt die Lagerbüchse 54 mit ihrer Druckfläche 134 auf einer Oberseite 178 und zwar im Druckbereich 136 des zweiten Schenkels 126 auf. Hierzu ist es erforderlich, daß das Spannelement 16 in einer Spannrichtung 180 nicht gegen einen Widerstand, beispielsweise das Werkstück 36, drückt, so daß die Spannspindel 46 keine in Richtung des Bodenteils 12 weisende Reaktionskraft 182 erfährt.

In diesem Fall ist das Verankerungselement 104 vorzugsweise so eingestellt, daß der Kopf 108 die Finger 128 des ersten Schenkels 124 mit Spiel übergreift und somit das Gehäuse 10 so bewegbar ist, daß der Gewindeabschnitt 110 in die U-förmigen Ausnehmungen 114 und 130 hinein oder aus diesen herausgleitet.

Wird durch Drehen der Spannspindel 46 das Spannelement 16 soweit verdreht, daß dieses einen Widerstand erfährt, beispielsweise mit dem Spannarm 30 das Werkstück 36 beaufschlagt, so wirkt beim Weiterdrehen die Reaktionskraft 182 auf die Spannspindel 46 und verschiebt diese mitsamt der Lagerbüchse in Richtung des Bodenteils 12, so daß die Lagerbüchse 54 mit ihrer unteren Druckfläche 134 auf die Oberseite 178 des zweiten Schenkels 126 einwirkt und diesen so weit nach unten drückt, bis dessen Unterseite 172 auf der Oberfläche 118 des Bodenteils 12 aufliegt.

Somit steht die Federwippe 120 dann in ihrer zweiten Stellung. In dieser hebt der erste Schenkel 124 mit seiner Unterseite 170 von der Oberfläche 118 ab und drückt mit seinen den Kopf 108 untergreifenden Fingern gegen eine Unterseite 184 des Kopfes 108, so daß das Verankerungselement 104 als Ganzes eine Festspannkraft 186 erfährt, welche von der Auflagefläche 102 weg weist. Die Bewegung des ersten Schenkels 124 von der Oberfläche 118 des Bodenteils 12 weg ist jedoch geringer als die des zweiten Schenkels 126 in Richtung der Bodenfläche 118, so daß die Federwippe 120 in der zweiten Stellung in einem Spannungszustand ist und als elastischer Kraftspeicher wirkt, welcher den Kopf 108 des Verankerungselements 104 beaufschlagt.

Durch die Abstützung der Federwippe 120 im Bereich ihrer Kippachse 122 auf der Oberfläche 118 des Bodenteils 12 wird im Gegenzug zur Einwirkung auf den Kopf 108 von der Federwippe 120 das Bodenteil 12 in Richtung der Auflagefläche 102 beaufschlagt und somit das Bodenteil 12 mit seiner Bodenfläche 100 gegen die Auflagefläche 102 gedrückt.

Somit wird in der zweiten Stellung der Federwippe 120 das Gehäuse 10 gegenüber dem Maschinentisch 38 und das Verankerungselement 104 sowohl gegenüber dem Gehäuse 10 als auch gegenüber dem Maschinentisch 38 verspannt, so daß insgesamt das Gehäuse 10 fest auf dem Maschinentisch 38 fixiert ist.

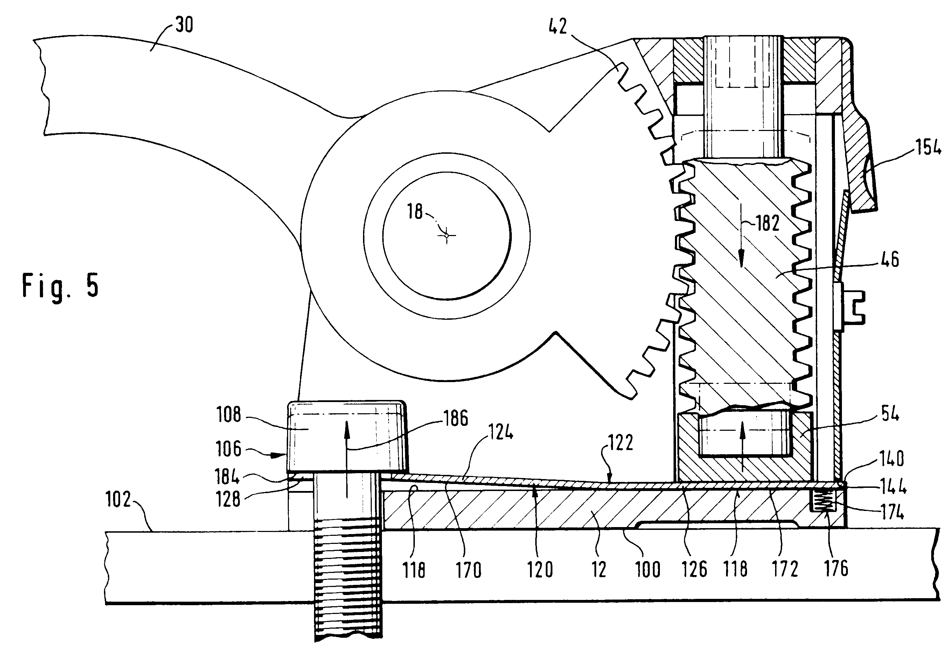

In der ersten Stellung der Federwippe 120 liegt die Rastzunge 146 an der Hinterkante 142 des zweiten Schenkels 126 an, wobei der zweite Schenkel 126 frei beweglich ist. Die Rastzunge 146 wird jedoch aufgrund der Torsion der Torsionsstege 148 an der Hinterkante 142 in Anlage gehalten. Beim Übergang der Federwippe 120 in die zweite Stellung, dargestellt in Fig. 5, ist der zweite Schenkel 126 so weit an der Rastzunge 146 entlangbewegt, daß die Haltefläche 144 die Möglichkeit hat, über die Rastfläche 140 zu gleiten und somit ein Zurückspringen des zweiten Schenkels 126 in die erste Stellung zu verhindern. Die Rastzunge 146 hält in ihrer Raststellung somit die Federwippe 120 in ihrer zweiten Stellung durch Verrasten fest, so daß auch das Gehäuse 10 gegenüber dem Maschinentisch 38 festgelegt bleibt.

Ein Lösen der Verrastung der Federwippe 120 in der zweiten Stellung ist durch Betätigung des Druckstücks 154 möglich, welches auf den Betätigungsschenkel 152 wirkt, somit der Beaufschlagung der Rastzunge 146 durch die Torsionsstege 158 entgegenwirkt, so daß die Rastzunge 146 sich in Richtung der Hinterseite 132 des Gehäuses 10 verschwenkt, die Haltefläche 144 über die Rastfläche 140 in Richtung der Hinterkante 142 hinweggleitet und somit der zweite Schenkel 126 die Möglichkeit hat, unterstützt durch die Druckfeder 174, in die erste Stellung zurückzuschwenken.

Die erfindungsgemäße Spanneinrichtung ist nun so auf dem Maschinentisch 38 montierbar, daß zunächst in der ersten Stellung der Federwippe 120 das Verankerungselement 110 lose mit dem Gehäuse 10, das heißt den Ausnehmungen 114 und 130 in Eingriff gebracht wird, dann durch Drehen der Spannspindel 46 und Verschwenken des Spannarms 30 in der Spannrichtung 180 gegen ein Widerlager, beispielsweise ein Werkstück 36, die Federwippe 120 in die zweite Stellung überführt wird, in welcher sie das Gehäuse 10, das Verankerungselement 104 und den Maschinentisch 38 gegeneinander verspannt. Da mittels der Rastzunge 146 die Federwippe 120 in der zweiten Stellung selbsttätig verrastet wird, kann die Spannspindel 46 wieder gelöst und das Spannelement 16 frei bewegt werden. Das Gehäuse 10 bleibt nach wie vor relativ zum Maschinentisch und zum Verankerungselement 104 festgelegt. Damit können beliebige Spannungen mittels des nun am Maschinentisch 38 fixierten Gehäuses 10 vorgenommen werden. Zum Lösen des Gehäuses 10 vom Maschinentisch 38 ist lediglich eine Betätigung des Druckstücks 154 erforderlich, wodurch die Verrastung der Federwippe 120 in der zweiten Stellung gelöst wird und diese somit wiederum in die erste Stellung, unterstützt durch die Druckfeder 174, zurückkehrt.

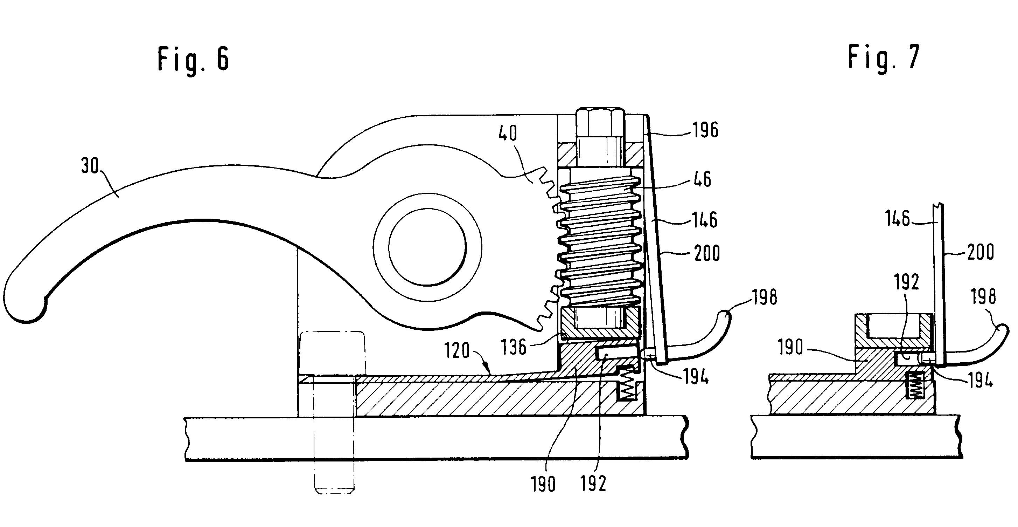

Bei einem zweiten Ausführungsbeispiel, dargestellt in Fig. 6, sind diejenigen Teile, die mit denen des ersten Ausführungsbeispiels identisch sind, mit denselben Bezugszeichen versehen. Bezüglich dieser Teile wird auf die Ausführungen zum ersten Ausführungsbeispiel Bezug genommen.

Im Gegensatz zum ersten Ausführungsbeispiel ist die Federwippe 120 im Bereich des zweiten Schenkels 126 mit einem Druckkörper 190 versehen, welcher den Druckbereich 136 trägt. In diesen Druckkörper 190 ist eine zur Hinterkante 142 hin offene Bohrung 192 eingebracht, mit welcher eine Rastnase 194 in der zweiten Stellung, dargestellt in Fig. 7, in Eingriff bringbar ist. Diese Rastnase 194 ist ebenfalls an der Rastzunge 146 gehalten, wobei die Rastzunge ihrerseits federnd ausgebildet ist und mit einem Endbereich 196 fest an den beiden Seitenwänden 14 gehalten ist.

Um die Rastnase 194 in der zweiten Stellung der Federwippe 120 außer Eingriff mit der Bohrung 192 zu bringen, ist an der Rastzunge, vorzugsweise in Höhe der Rastnase; ein Griff 198 vorgesehen, welcher von einer Rückseite 200 der Rastzunge 146 absteht, so daß durch Ziehen an dem Griff 198 die Rastnase 194 aus der Bohrung 192 bewegbar ist.

## Patentansprüche

1. Spanneinrichtung, insbesondere zum Spannen von Werkstücken auf einem Maschinentisch, umfassend ein Gehäuse (10), welches mittels eines Verankerungselements (104) auf einer Auflagefläche (102) eines Trägers (38) fixierbar ist, ein gegenüber dem Gehäuse (10) bewegbares Spannelement mit einem von dem Gehäuse (10) abstehenden Spannarm (30) und eine an dem Gehäuse (10) drehbar gelagerte Spannspindel (46), mit welcher das Spannelement (30) bewegbar ist, ein sich an dem Gehäuse (10) abstützendes Festspannteil (120), welches zum Fixieren des Gehäuses (10) relativ zu dem Träger von einer ersten Stellung in eine zweite Stellung bewegbar ist, wobei in der ersten Stellung das Gehäuse (10) von der Auflagefläche (102) lösbar ist und in der zweiten Stellung das Festspannteil (120) durch Einwirkung auf das Verankerungselement (104) mit einer Festspannkraft (186) das Gehäuse (10) auf der Auflagefläche (102) fixiert, dadurch gekennzeichnet, daß das Festspannteil (120) durch die Spannspindel (46) von der ersten in die zweite Stellung bewegbar ist und daß das Festspannteil (120) in der zweiten Stellung durch ein Halteelement (146) fixierbar ist.

2. Spanneinrichtung nach Anspruch 1, dadurch gekennzeichnet, daß das Festspannteil (120) einen elastischen Kraftspeicher umfaßt, welcher beim Bewegen des Festspannteils (120) von der ersten Stellung in die zweite Stellung in einen Spannungszustand versetzbar ist.

3. Spanneinrichtung nach einem der Ansprüche 1 und 2, dadurch gekennzeichnet, daß das Festspannteil (120) in der zweiten Stellung mit einer von der Auflagefläche (102) weggerichteten Festspannkraft (186) auf das Verankerungselement (104) wirkt.

4. Spanneinrichtung nach einem der voranstehenden Ansprüche, dadurch gekennzeichnet, daß das Festspannteil (120) in der zweiten Stellung auf einen Kopf (108) des Verankerungselements (104) einwirkt.

5. Spanneinrichtung nach Anspruch 4, dadurch gekennzeichnet, daß das Festspannteil (120) in der zweiten Stellung den Kopf (108) in einer von einem Bodenteil (12) des Gehäuses (10) wegweisenden Richtung beaufschlagt.

6. Spanneinrichtung nach einem der voranstehenden Ansprüche, dadurch gekennzeichnet, daß sich das Festspannteil (120) auf dem Bodenteil (12) des Gehäuses (10) abstützt.

7. Spanneinrichtung nach einem der voranstehenden Ansprüche, dadurch gekennzeichnet, daß das Festspannteil einen kippbaren Festspannhebel (120) umfaßt.

8. Spanneinrichtung nach Anspruch 7, dadurch gekennzeichnet, daß das Festspannteil eine um eine Kippachse (122) kippbare Wippe (120) umfaßt.

9. Spanneinrichtung nach einem der voranstehenden Ansprüche, dadurch gekennzeichnet, daß das Festspannteil (120) von einem außerhalb eines vorderen Bereichs (105) des Gehäuses (10) liegenden Bereich (103) aus betätigbar ist.

10. Spanneinrichtung nach Anspruch 9, dadurch gekennzeichnet, daß das Festspannteil (120) von einem hinteren Bereich (103) des Gehäuses (10) aus betätigbar ist.

11. Spanneinrichtung nach einem der voranstehenden Ansprüche, dadurch gekennzeichnet, daß das Festspannteil (120) durch eine Axialverschiebung der Spannspindel (46) relativ zum Gehäuse (10) von der ersten in die zweite Stellung bewegbar ist.

12. Spanneinrichtung nach Anspruch 11, dadurch gekennzeichnet, daß das Festspannteil (120) durch ein im Gehäuse (10) beweglich geführtes Axiallager (52) der Spannspindel (46) von der ersten in zweite Stellung bewegbar ist.

13. Spanneinrichtung nach Anspruch 11 oder 12, dadurch gekennzeichnet, daß das Festspannteil (120) über eine Verschiebung der Spannspindel (46) bei blockierter Bewegung des Spannelements (16) von der ersten in die zweite Stellung bringbar ist.

14. Spanneinrichtung nach einem der voranstehenden Ansprüche, dadurch gekennzeichnet, daß das Festspannteil (120) in der zweiten Stellung durch das Halteelement (146) mit Formschluß festlegbar ist.

15. Spanneinrichtung nach Anspruch 14, dadurch gekennzeichnet, daß das Halteelement als Rastelement (146) ausgebildet ist.

16. Spanneinrichtung nach Anspruch 15, dadurch gekennzeichnet, daß das Rastelement (146) in seiner verrastenden Stellung an einer Rastfläche (140) des Festspannteils (120) anliegt.

17. Spanneinrichtung nach Anspruch 15 oder 16, dadurch gekennzeichnet, daß das Rastelement (146) in Richtung seiner verrastenden Stellung vorgespannt ist.

18. Spanneinrichtung nach Anspruch 17, dadurch gekennzeichnet, daß das Rastelement (146) durch Betätigung eines Betätigungselements (154, 198) aus seiner verrastenden Stellung herausbewegbar ist.

19. Spanneinrichtung nach einem der voranstehenden Ansprüche, dadurch gekennzeichnet, daß das Halteelement (146) in einem hinteren Bereich (103) des Gehäuses (10) angeordnet ist.

## Claims

1. Clamping device, in particular, for clamping workpieces on a machine table, comprising a housing (10) securable in position on a support surface (102) of a carrier (38) by means of an anchoring element (104), a clamping element movable relative to the housing (10) and having a clamping arm (30) projecting from the housing (10) and a clamping spindle (46) rotatably mounted on the housing (10) for moving the clamping element (30), a fastening element (120) supported on the housing (10) and movable relative to the carrier from a first position into a second position for securing the housing (10) in position, the housing (10) being detachable from the support surface (102) in the first position, and the fastening element (120) securing the housing (10) in position on the support surface (102) in the second position by acting on the anchoring element (104) with a fastening force (186), characterized in that the fastening element (120) is movable by the clamping spindle (46) from the first into the second position, and in that the fastening element (120) is securable in the second position by a holding element (146).

2. Clamping device as defined in claim 1, characterized in that the fastening element (120) comprises an elastic biasing means which is adapted to be brought into a tensioned state when the fastening element (120) is moved from the first position into the second position.

3. Clamping device as defined in one of claims 1 and 2, characterized in that in the second position the fastening element (120) acts on the anchoring element (104) with a fastening force (186) directed away from the support surface (102).

4. Clamping device as defined in any one of the preceding claims, characterized in that in the second position the fastening element (120) acts on a head (108) of the anchoring element (104).

5. Clamping device as defined in claim 4, characterized in that in the second position the fastening element (120) acts on the head (108) in a direction pointing away from a base portion (12) of the housing (10).

6. Clamping device as defined in any one of the preceding claims, characterized in that the fastening element (120) is supported on the base portion (12) of the housing (10).

7. Clamping device as defined in any one of the preceding claims, characterized in that the fastening element comprises a tiltable fastening lever (120).

8. Clamping device as defined in claim 7, characterized in that the fastening element comprises a rocker (120) tiltable about a tilt axis (122).

9. Clamping device as defined in any one of the preceding claims, characterized in that the fastening element (120) is actuatable from a region (103) located outside a front region (105) of the housing (10).

10. Clamping device as defined in claim 9, characterized in that the fastening element (120) is actuatable from a rear region (103) of the housing (10).

11. Clamping device as defined in any one of the preceding claims, characterized in that the fastening element (120) is moveable from the first into the second position by an axial displacement of the clamping spindle (46) relative to the housing (10).

12. Clamping device as defined in claim 11, characterized in that the fastening element (120) is movable from the first into the second position by an axial bearing (52) of the clamping spindle (46), said axial bearing being guided for movement in the housing (10).

13. Clamping device as defined in claim 11 or 12, characterized in that the fastening element (120) is adapted to be brought from the first into the second position via a displacement of the clamping spindle (46) when movement of the clamping element (16) is blocked.

14. Clamping device as defined in any one of the preceding claims, characterized in that the fastening element (120) is securable in the second position by the holding element (146) by positive connection.

15. Clamping device as defined in claim 14, characterized in that the holding element is designed as a locking element (146).

16. Clamping device as defined in claim 15, characterized in that the locking element (146) abuts in its locking position on a locking surface (140) of the fastening element (120).

17. Clamping device as defined in claim 15 or 16, characterized in that the locking element (146) is biased in the direction of its locking position.

18. Clamping device as defined in claim 17, characterized in that the locking element (146) is movable out of its locking position by actuation of an actuating element (154, 198).

19. Clamping device as defined in any one of the preceding claims, characterized in that the holding element (146) is arranged in a rear region (103) of the housing (10).

## Revendications

1. Dispositif de serrage, notamment pour le serrage de pièces à usiner sur une table de machine, comprenant un carter (10), qui peut être fixé au moyen d'un élément d'ancrage (104) sur une surface d'appui (102) d'un support (38), un élément de serrage déplaçable par rapport au carter (10) et comportant un bras de serrage (3) qui fait saillie à partir du carter (10), et une broche de serrage (46), qui est montée de manière à pouvoir tourner sur le carter (10) et avec laquelle l'élément de serrage (40) est déplaçable, une partie de serrage intense (120), qui prend appui sur le carter (10) et qui, pour la fixation du carter (10) par rapport au support, est déplaçable depuis une première position dans une seconde position, auquel cas, dans la première position, le carter (10) peut être détaché de la surface d'appui (102) et, dans la seconde position, la partie de serrage intense (120) fixe le carter (10) sur la surface d'appui (102), au moyen de l'action sur l'élément d'ancrage (104) avec une force de serrage intense (186), caractérisé en ce que la partie de serrage intense (120) est déplaçable de la première position dans la seconde position au moyen de la broche de serrage (36) et que la pièce de serrage intense (120) peut être fixée dans la seconde position au moyen d'un élément de retenue (146).

2. Dispositif de serrage selon la revendication 1, caractérisé en ce que la partie de serrage intense (120) comprend un accumulateur de force élastique, qui, lors du déplacement de la partie de serrage intense (120) de la première position à la seconde position, peut être amené dans un état de serrage.

3. Dispositif de serrage selon l'une des revendications 1 et 2, caractérisé que dans la seconde position, la partie de serrage intense (120) agit sur l'élément d'ancrage (104) avec une force de serrage intense (186) dirigée à l'opposée de la surface d'appui (102).

4. Dispositif de serrage selon l'une des revendications précédentes, caractérisé en ce que dans la seconde position, la partie de serrage intense (120) agit sur une tête (108) de l'élément d'ancrage (104).

5. Dispositif de serrage selon la revendication 4, caractérisé en ce que dans la seconde position, la partie de serrage intense (120) charge la tête (108) dans une direction s'écartant de la partie de base (12) du carter (10).

6. Dispositif de serrage selon l'une des revendications précédentes, caractérisé en ce que la partie de serrage intense (120) prend appui sur la partie de base (12) du carter (10).

7. Dispositif de serrage selon l'une des revendications précédentes, caractérisé en ce que la partie de serrage intense comprend un levier basculant de serrage intense (120).

8. Dispositif de serrage selon la revendication 7, caractérisé en ce que la partie de serrage intense comprend un élément basculant (120) pouvant basculer autour d'un axe de basculement (122).

9. Dispositif de serrage selon l'une des revendications précédentes, caractérisé en ce que la partie de serrage intense (120) peut être actionnée à partir d'une partie (103) qui est située à l'extérieur d'une partie avant (105) du carter (10).

10. Dispositif de serrage selon la revendication 9, caractérisé en ce que la partie de serrage intense (120) peut être actionnée à partir d'une partie arrière (105) du carter (10).

11. Dispositif de serrage selon l'une des revendications précédentes, caractérisé en ce que la partie de serrage intense (120) est déplaçable au moyen d'un déplacement axial de la broche de serrage (46) par rapport au carter (10), de la première position dans la seconde position.

12. Dispositif de serrage selon la revendication 11, caractérisé en ce que la partie de serrage intense (120) peut être déplacée de la première position dans la seconde position au moyen d'un palier axial (52) de la broche de serrage (46), qui est guidé de manière à être déplaçable dans le carter (10).

13. Dispositif de serrage selon la revendication 11 ou 12, caractérisé en ce que la partie de serrage intense (120) peut être amenée de la première position dans la seconde position par l'intermédiaire d'un déplacement de la broche de serrage (46) alors que le déplacement de l'élément de serrage (16) est bloqué.

14. Dispositif de serrage selon l'une des revendications précédentes, caractérisé en ce que la partie de serrage intense (120) peut être fixée dans la seconde position selon une liaison par formes complémentaires au moyen de l'élément de retenue (146).

15. Dispositif de serrage selon la revendication 14, caractérisé en ce que l'élément de retenue est agencé sous la forme d'un élément d'encliquetage (146).

16. Dispositif de serrage selon la revendication 15, caractérisé en ce que dans sa position encliquetée, l'élément d'encliquetage (146) s'applique sur une surface d'encliquetage (140) de la partie de serrage intense (120).

17. Dispositif de serrage selon la revendication 15 ou 16, caractérisé en ce que l'élément d'encliquetage (146) est précontraint en direction de sa position encliquetée.

18. Dispositif de serrage selon la revendication 17, caractérisé en ce que l'élément d'encliquetage (146) peut être écarté de sa position encliquetée, par actionnement d'un élément d'actionnement (154,198).

19. Dispositif de serrage selon l'une des revendications précédentes, caractérisé en ce que l'élément de retenue (146) est disposé dans une partie arrière (103) du carter (10).
